# EUROPEAN PATENT APPLICATION

(11) **EP 4 318 880 A1**
(43) Date of publication of application: **07.02.2024**
(21) Application number: 22201038.1
(22) Date of filing: 12.10.2022
(51) Int. Cl.: H02K 1/14, H02K 7/00, H02K 7/14, F16F 15/126

(54) **HIGH-SPEED HAIRDRYER BRUSHLESS MOTOR**

(30) Priority: 01.08.2022 CN 202210914443
(71) Applicant: Shenzhen City Wanzhida MOTOR Manufacture Co., Ltd., Shenzhen (CN)
(72) Inventor: WENG, Meng Kun, Shenzhen (CN); ZHANG, Song, Shenzhen (CN); Qi, Zong Qian, Shenzhen (CN)
(74) Representative: Bandpay & Greuter

(57) **Abstract**

A high-speed hairdryer brushless motor includes an outer housing, a stator assembly and a rotor assembly. The stator assembly includes a stator core and a coil assembly. The stator core includes a yoke portion and a teeth portion. The teeth portion includes an inner cylinder body and N outer teeth. The inner wall of the inner cylinder body is a complete cylindrical surface. N magnetic insulating grooves are provided on the outer wall of the inner cylinder body, each magnetic insulating groove being provided axially along an entire length of the inner cylinder body. The coil assembly is wound on the outer teeth of the teeth portion. Each magnetic insulating groove is a V-shaped groove that opens toward the exterior of the inner cylinder body. The rotor assembly includes a rotating shaft and a rotor magnet. An air gap is provided between the rotor magnet and the cylindrical surface.

## Description

### TECHNICAL FIELD

The present disclosure belongs to the field of brushless motors, and more particularly relates to a high-speed hairdryer brushless motor.

### BACKGROUND TECHNOLOGY

A motor is a device that uses the principle of electromagnetic induction to convert electrical energy into mechanical energy, it is widely used in industrial production and various electrical devices needed in life. In the field of high-speed motors, especially above 100000rpm, high-speed hairdryer brushless motors are especially suitable for household appliances and personal care industry because the motors have advantages such as high efficiency and small size.

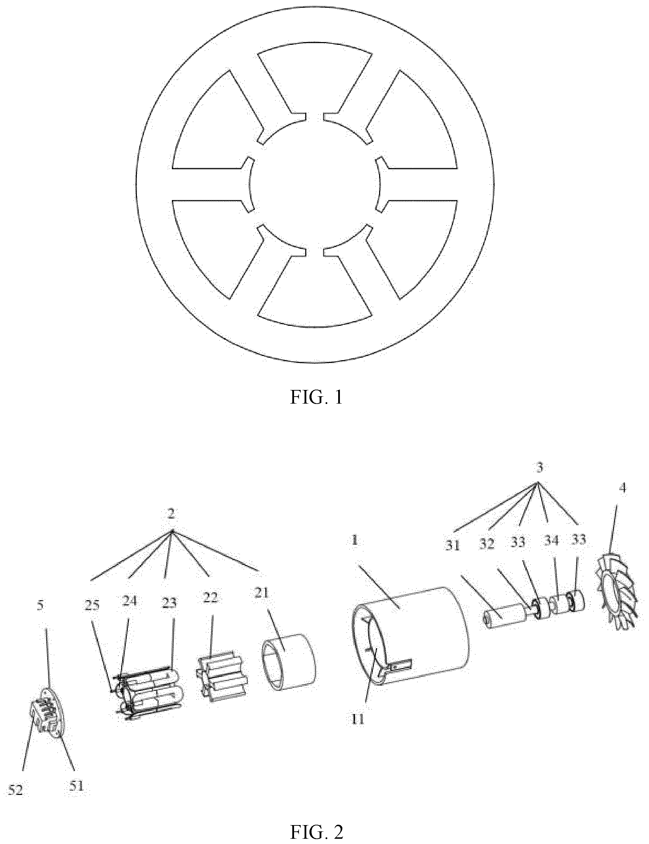

Referring to Fig. 1, in the prior art, the teeth portion and the yoke portion of the stator core of a high-speed hairdryer brushless motor are integrally formed, this reduces the effective space for winding, and results in a high-speed hairdryer brushless motor having a larger size and lower efficiency, it cannot meet the requirement of miniaturization of a high-speed hairdryer brushless motor, and the teeth portion in Fig. 1 is not continuous, and is completely disconnected to form open slots A, so that the inner ends of the inner teeth are not continuous, cogging torque is large, and magnetic leakage is relatively high, thereby resulting in low operation efficiency and relatively poor silence effect.

In terms of technology, anaerobic adhesive is often used on the market to fix an impeller on a shaft, since the process is too simple, the anaerobic adhesive that is not completely dried flows to the bearings and causes abnormal noise or jamming of the motor, and under the circumstance that the motor is running at high speed, the centrifugal force is great, the reinforcement of the anaerobic adhesive is not enough to have the impeller tightly fixed on the rotating shaft, so that the impeller can easily fall off and fly out, which causes property or personal safety.

### SUMMARY OF THE DISCLOSURE

In view of the above defects or the needs of improvement of the prior art, the present disclosure provides a high-speed hairdryer brushless motor, which can reduce the size of the high-speed hairdryer brushless motor, improve the efficiency of the high-speed hairdryer brushless motor, reduce the noise of the high-speed hairdryer brushless motor, increase the pull-out force of an impeller, improve the operation safety of the present disclosure.

In order to achieve the above objects, according to one aspect of the present disclosure, there is provided a high-speed hairdryer brushless motor, including an outer housing, a stator assembly and a rotor assembly, wherein:
the stator assembly includes a stator core and a coil assembly, the stator core includes a hollow yoke portion and a teeth portion mounted on an inner wall of the yoke portion, an outer wall of the yoke portion is fixed on an inner wall of the outer housing, the teeth portion includes an inner cylinder body and N outer teeth integrally formed and disposed on an outer wall of the inner cylinder body and N≥2, an inner wall of the inner cylinder body is a complete cylindrical surface, the N outer teeth are evenly arranged around a centerline of the cylindrical surface, the outer wall of the inner cylinder body is provided with N magnetic insulating grooves and the N magnetic insulating grooves are evenly arranged in a circumferential direction, each two adjacent outer teeth being respectively provided therebetween with one of the magnetic insulating grooves, each of the magnetic insulating grooves is provided along an entire length of the inner cylinder body in an axial direction, the coil assembly is wound around the outer teeth of the teeth portion;
each of the magnetic insulating grooves is a V-shaped groove that opens toward an exterior of the inner cylinder body;
the rotor assembly includes a rotating shaft and a rotor magnet mounted on the rotating shaft, the rotating shaft is mounted on the inner wall of the outer housing through bearings, an air gap is provided between the rotor magnet and the cylindrical surface.

Preferably, the coil assembly is connected to a PCB assembly through a plurality of pins, the PCB assembly includes a PCB board and a connector mounted on the PCB board, the PCB board is respectively provided with a pinhole in a position that corresponds to each of the plurality of pins, each pin is respectively inserted into the pinhole in the corresponding position and then connected to the PCB board.

Preferably, the inner wall of the yoke portion is evenly arranged with a plurality of engaging grooves in a circumferential direction, each outer tooth of the teeth portion is respectively engaged within one of the engaging grooves.

Preferably, a width of one end of the outer tooth far away from the inner cylinder body is enlarged relative to a width of one end of the outer tooth proximate to the inner cylinder body, thereby forming a positioning protrusion, the positioning protrusion engages within the engaging groove.

Preferably, any two adjacent outer teeth are symmetrically located on two sides of the magnetic insulating groove between the two adjacent outer teeth.

Preferably, the rotor magnet is an annular integral structure.

Preferably, it further includes a silicone sleeve sleeved on the rotating shaft, two bearings are provided on the rotating shaft, the silicone sleeve is located between the two bearings so as to reduce vibration generated by the rotor assembly when rotating.

Preferably, each of the outer teeth is provided with a wire winding groove, and the coil assembly is wound on the wire winding grooves.

Preferably, the rotor magnet is mounted on a rotor magnet mounting section of the rotating shaft, the rotor magnet mounting section includes an A section and a B section, the A section is provided with knurls, the A and B sections are provided with a UV anaerobic adhesive, a diameter of the B section is less than a diameter of the A section, thereby forming a step at an end portion of the A section proximate to the B section, so that storage capacity of the UV anaerobic adhesive on the rotor magnet mounting section is increased, the UV anaerobic adhesive is solidified by UV lamp irradiation, so that an inner wall of the rotor magnet is securely bonded to the rotor magnet mounting section, thereby improving pull-out force of the rotor magnet.

Preferably, the rotating shaft has an impeller mounting section for contacting with an inner wall of an impeller and fixedly mounting the inner wall of the impeller, the impeller mounting section includes a first section and a second section, the first section is provided with knurls, the first and second sections are provided with a UV anaerobic adhesive, a diameter of the second section is less than a diameter of the first section, thereby forming a step at an end portion of the first section proximate to the second section, so that storage capacity of the UV anaerobic adhesive on the impeller mounting section is increased, the UV anaerobic adhesive is solidified by UV lamp irradiation, so that the inner wall of the impeller is securely mounted on the impeller mounting section, thereby improving pull-out force of the impeller.

In general, compared with the prior art, the above technical solutions conceived by the present disclosure can achieve the following beneficial effects:
1) Magnetic insulating grooves are designed on the outer wall of the inner cylinder body of the teeth portion of the stator core of the present disclosure, this can effectively reduce magnetic leakage and improve the operation efficiency of the brushless motor.
2) The inner wall of the inner cylinder body of the teeth portion of the stator core of the present disclosure is a complete cylindrical surface, which is not disconnected to form open slots, this can effectively reduce the fixed cogging torque of the motor, reduce the noise of the high-speed hairdryer brushless motor, and meet the requirement of quiet operation.
3) The coil assembly of the present disclosure is wound on the wire winding grooves of the coil frame, since the coil assembly is wound on the outside, the effective space for wire winding is increased, the groove filling rate is enhanced, and more coils can be wound in the same space, this can reduce the size of the high-speed hairdryer brushless motor, and meet the requirement of miniaturization of the brushless motor.
4) The rotating shaft of the rotor is designed with a silicone sleeve, which can effectively relieve the vibration generated by the rotor assembly during rotation.
5) The diameter of the second section of the impeller mounting section is smaller than that of the first section to form a step design, so that more UV anaerobic adhesive can be stored on the second section, UV anaerobic adhesive and UV lamp irradiation are used in the process, so that the connection between the impeller and the rotating shaft is more secured, thereby ensuring that the impeller will not fall off when the rotating shaft rotates at high speed.

### DESCRIPTION OF DRAWINGS

Fig. 1 is a structural schematic diagram of a stator core in a prior art structure;
Fig. 2 is an exploded structural schematic diagram of the present disclosure;
Fig. 3 is a sectional view of the present disclosure;
Fig. 4 is a schematic diagram of a stator core of the present disclosure;
Fig. 5 is a schematic diagram of an impeller in the present disclosure;
Fig. 6 is a schematic diagram of a rotating shaft in the present disclosure;
Fig. 7 is a schematic diagram of the combination of a coil frame and pins provided on a teeth portion;
Fig. 8 is a schematic diagram of a magnetic yoke in the present disclosure;
Fig. 9 is a schematic diagram of a stator assembly in the present disclosure;
Fig. 10 is a front view of the stator core in the present disclosure;
Fig. 11 is a cogging torque diagram in a comparative example when there are no magnetic insulating grooves;
Fig. 12 is a cogging torque diagram of the present disclosure when there are magnetic insulating grooves;
Fig. 13 is a diagram of the magnetic field lines distribution in a comparative example when there are no magnetic insulating grooves;
Fig. 14 is a diagram of the magnetic field lines distribution of the present disclosure when there are magnetic insulating grooves.

### DETAILED EMBODIMENTS

In order to make the objectives, technical solutions and advantages of the present disclosure clearer, the present disclosure will be further described in detail below with reference to the accompanying drawings and embodiments. It should be understood that the specific embodiments described herein are only used to explain the present disclosure, but not to limit the present disclosure. In addition, the technical features involved in the various embodiments of the present disclosure described below can be combined with each other as long as they do not conflict with each other.

### Embodiment

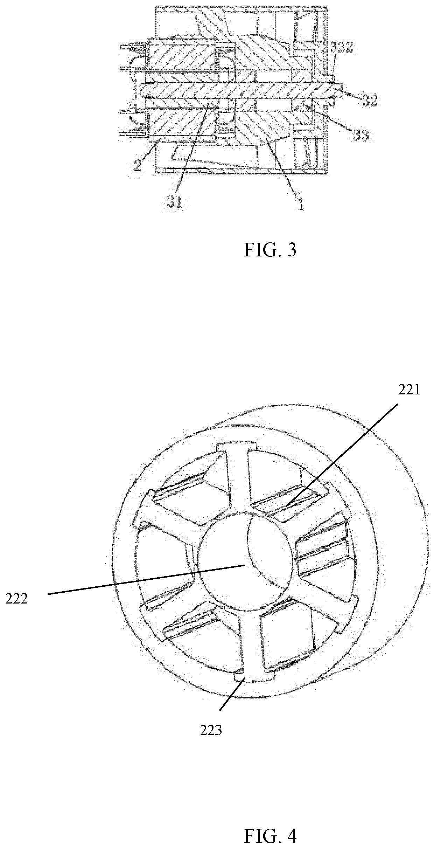

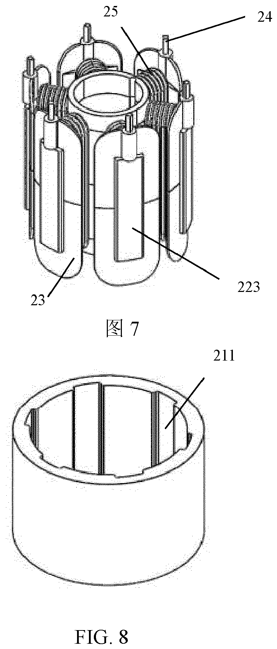

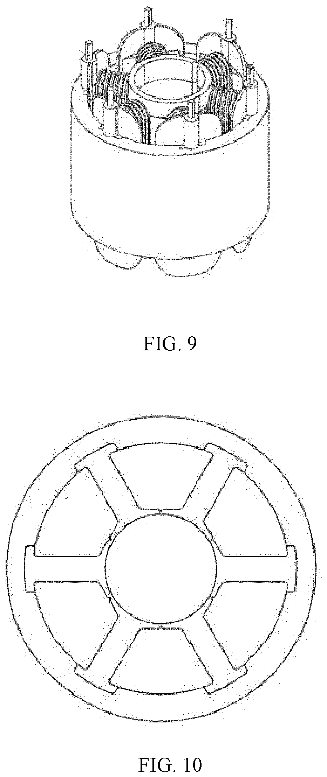

Referring to Fig. 2 - Fig. 10, a high-speed hairdryer brushless motor includes an outer housing 1, a stator assembly 2 and a rotor assembly 3, wherein:
the stator assembly 2 includes a stator core and a coil assembly, the stator core includes a hollow yoke portion 21 and a teeth portion 22 mounted on an inner wall of the yoke portion 21, the yoke portion 21 has a cylindrical shape and an inner cavity, which is used for accommodating and mounting of the teeth portion 22, an outer wall of the yoke portion 21 is fixedly mounted on an inner wall 11 of the outer housing 1, the yoke portion 21 is preferably fixedly mounted inside the outer housing 1 by an adhesive, the material of the outer housing 1 is preferably Nylon PA66. The teeth portion 22 includes an inner cylinder body and N outer teeth integrally formed and disposed on an outer wall of the inner cylinder body and N > 2, an inner wall of the inner cylinder body is a complete cylindrical surface 222, and the inner wall has no discontinuities or grooves, the N outer teeth are evenly arranged around a centerline of the cylindrical surface 222, the outer wall of the inner cylinder body is provided with N magnetic insulating grooves 221 and the N magnetic insulating grooves 221 are evenly arranged in a circumferential direction, the magnetic insulating grooves 221 do not penetrate through the sidewall of the inner cylinder body in a radial direction, the magnetic insulating groove 221 has a groove bottom, each two adjacent outer teeth is respectively provided therebetween with one of the magnetic insulating grooves 221, each of the magnetic insulating grooves 221 is provided along an entire length of the inner cylinder body in an axial direction, that is the length of the magnetic insulating grooves 221 is the same as the axial length of the inner cylinder body, the coil assembly is wound around the outer teeth of the teeth portion 22; preferably, each of the outer teeth is provided with a wire winding groove, the coil assembly is wound on the wire winding grooves. Due to the existence of the wire winding grooves, the coil assembly is wound outside on the outer teeth, the effective space for wire winding is increased, the groove filling rate is raised, more coils can be wound in the same space, this can reduce the size of the high-speed hairdryer brushless motor, and meet the requirement of miniaturization of a brushless motor.

Each of the magnetic insulating grooves 221 is a V-shaped groove and opens toward the exterior of the inner cylinder body, the advantage of the magnetic insulating grooves 221 being V-shaped is that the magnetic insulating grooves 221 can be thinner, with high magnetic resistance and better magnetic insulation results. The dimension of the magnetic insulating grooves 221 needs to ensure that the inner cylinder body (or the stator core) has a suitable overall strength, and the V-shaped grooves have a small impact on strength reduction of the teeth portion 22, so that the stator core will not be deformed during operation. If the magnetic insulating grooves 221 are not V-shaped grooves but have other shapes such as rectangle or trapezoid, then the strength of the inner cylinder body (or the stator core) will be relatively weakened, so that after long-term interaction of the rotor assembly 3 and the stator assembly 2, the stator core will be deformed, and the air gap between the stator assembly and the rotor assembly will become smaller, eventually touching and rubbing of the stator assembly 2 and the rotor assembly 3 will occur, thereby reducing the service life of the brushless motor.

The rotor assembly 3 includes a rotating shaft 32 and a rotor magnet 31 mounted on the rotating shaft 32, the rotating shaft 32 is mounted on the inner wall of the outer housing 1 through bearings 33, there is an air gap 225 between the rotor magnet 31 and the cylindrical surface 222, an impeller 4 is mounted on the rotating shaft 32. The rotor magnet 31 is an annular integral structure, not a structure formed by splicing arc-shaped tiles together. The rotor magnet 31 of the present disclosure is fixed on the rotating shaft 32 by a UV anaerobic adhesive, the UV anaerobic adhesive is irradiated by an ultraviolet lamp in a process, so that the UV anaerobic adhesive can be quickly solidified, this prevents the UV anaerobic adhesive from flowing to the bearings 33 due to being not dried, and causing jamming problem of the motor. The rotor magnet 31 is mounted on a rotor magnet mounting section of the rotating shaft 32, the rotor magnet mounting section includes an A section and a B section, the A and B sections are in contact with an inner wall of the rotor magnet 31, the section A is provided with knurls 321, the UV anaerobic adhesive is provided on both the A section and the B section, the diameter of the B section is smaller than the diameter of the A section, so that a step is formed at an end portion of the A section proximate to the B section, this increases the storage capacity of the UV anaerobic adhesive on the rotor magnet mounting section, the UV anaerobic adhesive is solidified by UV lamp irradiation, so that the inner wall of the rotor magnet 31 is securely bonded to the rotor magnet mounting section, thereby improving pull-out force of the rotor magnet 31.

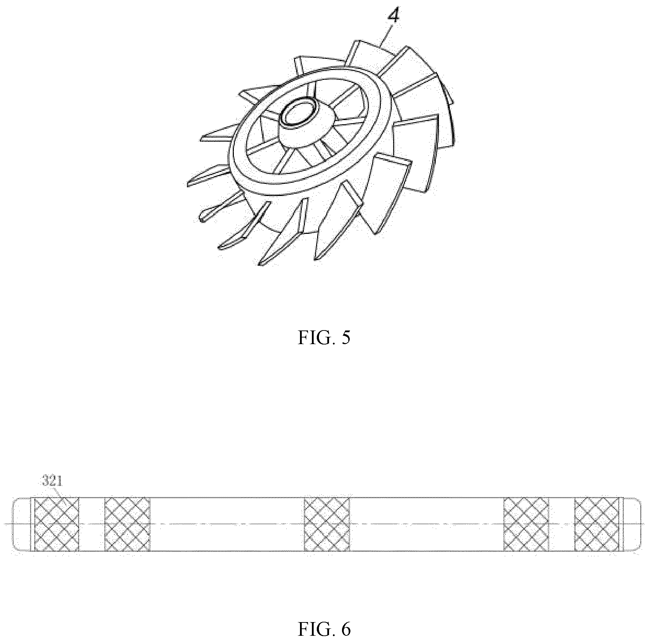

The rotating shaft 32 has an impeller mounting section for contacting with an inner wall of an impeller 4 and fixedly mounting the inner wall of the impeller 4, the impeller mounting section includes a first section and a second section, the first and second sections are both in contact with the inner wall of the impeller. 4, the first section is provided with knurls, the first section and the second section are provided with a UV anaerobic adhesive 322, the diameter of the second section is smaller than the diameter of the first section, thereby forming a step at an end portion of the first section proximate to the second section, this increases the storage capacity of the UV anaerobic adhesive 322 on the impeller mounting section, the UV anaerobic adhesive is solidified by UV lamp irradiation, so that the inner wall of the impeller 4 is securely mounted on the impeller mounting section, thereby improving pull-out force of the impeller 4. Since the diameter of the second section is smaller than the diameter of the first section to form a step, compared with the case where the impeller 4 is mounted on a shaft without a step, more UV anaerobic adhesive 322 can be applied on the second section in order to bond the impeller 4 on the rotating shaft 32. In addition, the first section of the rotating shaft 32 is also provided with knurls 321 to increase the friction between the impeller 4 and the rotating shaft 32. Even if the rotor assembly 3 rotates at a high speed, the impeller 4 will not fall off, the pull-out force of the impeller 4 is increased, the service life and operation safety of the present disclosure can be improved. In addition, the impeller 4 is preferably formed in one piece by injection molding, it can be understood that this embodiment does not further limit the specific structure of the impeller 4, in the present embodiment, a double-layer fan blade impeller as shown in Fig. 5 or other impeller structure that achieves blowing and heat dissipating effect can also be adopted.

Further, the stator coil 24 is connected to the PCB assembly 5 through a plurality of pins 25, the PCB assembly 5 includes a PCB board 51 and a connector 52 mounted on the PCB board 51, the PCB board 51 is respectively provided with a pinhole in a position that corresponds to each of the plurality of pins 25, each pin 25 is respectively inserted into the pinhole in the corresponding position and then connected to the PCB board 51. The number of pinholes is consistent with the number of pins 25 in the stator assembly 2, so that the pins 25 can be inserted into the pinholes, and the PCB assembly and the stator assembly 2 can be fixedly mounted together by welding, the connector 52 is welded on the PCB board 51, the connector 52 is used for connecting to an external power supply in order to energize the stator coil 24, so that the motor drives the impeller 4 to rotate.

Further, a plurality of engaging grooves 211 are evenly arranged on the inner wall of the yoke portion 21 in a circumferential direction, each outer tooth of the teeth portion 22 is respectively engaged within one of the engaging grooves 211, thereby facilitating quick mounting of teeth portion 22 in the yoke portion 21. Preferably, the width of one end of the outer tooth far away from the inner cylinder body is enlarged relative to the width of one end of the outer tooth proximate to the inner cylinder body, thereby forming positioning protrusions 223, the positioning protrusions 223 are engaged within the engaging grooves 211, the positioning protrusions 223 can increase the contact area between the outer teeth and the yoke portion 21, thereby improving the strength of connection of the two and reducing the contact stress.

Further, it also includes a silicone sleeve 34 mounted on the rotating shaft 32, there are two bearings 33 on the rotating shaft 32, the silicone sleeve 34 is located between the two bearings 33 in order to reduce vibration generated by the rotor assembly 3 as it rotates.

The operation principle of the present disclosure is as follows: connecting an external power supply through the connector 52, energizing the PCB board 51, then energizing the stator coil 24 wound on the coil frame 23 through the pins 25, driving the magnet mounted in the stator assembly 2 to rotate by electromagnetic effect, the magnet is fixedly mounted on the shaft, and then driving the shaft to rotate, the impeller 4 is fixedly mounted on the shaft, and the rotation of the shaft drives the impeller 4 to rotate.

### Comparative Example 1

Comparative Example 1 adopts the existing structure in Fig. 1, the ends of the teeth portion of the stator core far away from the yoke portion in the Comparative Example 1 are completely disconnected from each other and form through open slots A, other structures are the same as those in the embodiment.

### Comparative Example 2

In Comparative Example 2, the magnetic insulating grooves of the embodiment are eliminated, other structures are the same as those in the embodiment.

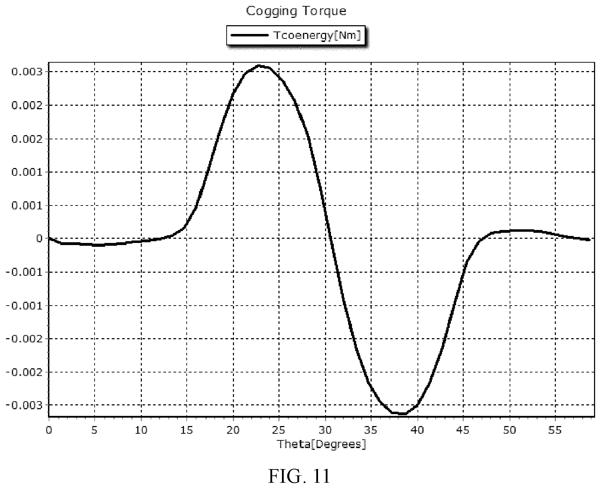

The comparison results of cogging torque peak value of Comparative Example 1 and the present embodiment, and the comparison results of magnetic leakage condition of Comparative Example 2 and the present embodiment are as follows:
Referring to Fig. 11, the cogging torque peak value of Comparative Example 1 is 0.0033N·m.

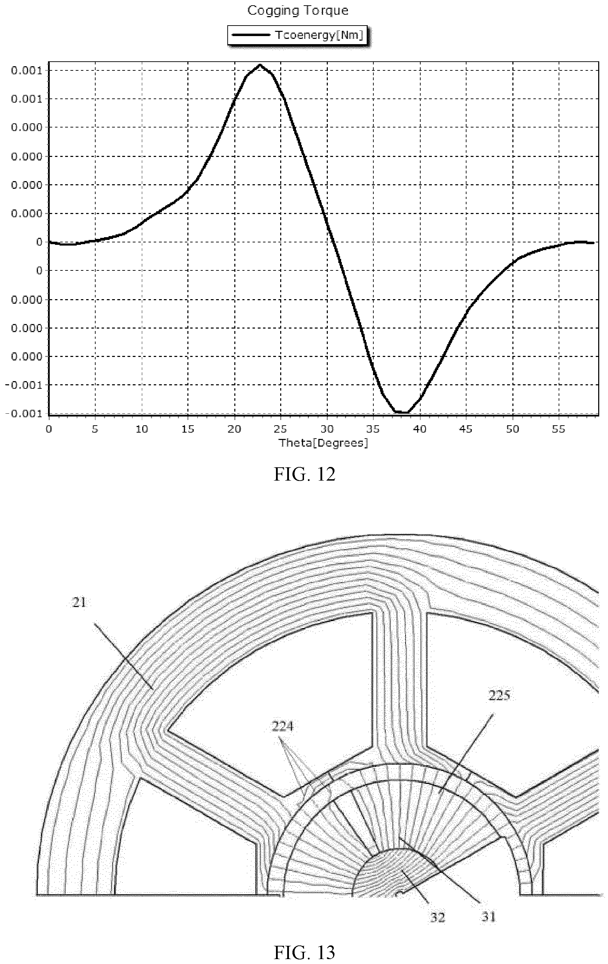

Referring to Fig. 12, the sidewall of the inner cylinder body of the teeth portion of the stator core in the embodiment of the present disclosure is not disconnected, when the inner wall has a complete cylindrical surface, the cogging torque peak value is 0.001N·m, the cogging torque peak value of the structure in the embodiment of the present disclosure is 0.0023N·m smaller than that of Comparative Example 1. It can be seen that when the inner cylinder body of the stator core teeth portion has a complete cylindrical surface, and the sidewall is not disconnected to form open slots, when the rotor assembly 3 rotates, there is no or very small torque pulsation of cogging conversion, this can effectively reduce the cogging torque of the motor, thereby reducing the noise of the motor.

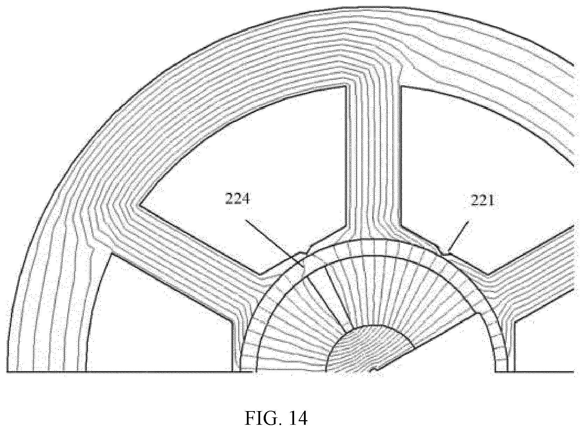

Referring to Fig. 13, in Comparative Example 2 when there are no magnetic insulating grooves, there are three magnetic field lines 224 of magnetic leakage, referring to Fig. 14, in the embodiment of the present disclosure when there are magnetic insulating grooves, there is only one magnetic field line 224 of magnetic leakage, it can be seen that when the teeth portion of the stator core is designed with magnetic insulating grooves, it can effectively reduce magnetic leakage and improve the operation efficiency of the embodiment of the present disclosure. In the embodiment of the present disclosure, magnetic insulating grooves are arranged on the inner cylinder body of the stator core, this can make the magnetic insulating grooves thinner, the magnetic resistance is greater, the greater the magnetic resistance, the lesser the magnetic leakage, and the better the magnetic insulation effect.

In summary, in the embodiment of the present disclosure, the inner wall of the inner cylinder body is provided with a complete cylindrical surface 222, and the outer wall of the inner cylinder body is provided with magnetic insulating grooves, so as to improve efficiency and at the same time lower the cogging torque and reduce vibration and noise.

Those skilled in the art can easily understand that the above are only preferred embodiments of the present disclosure, and are not intended to limit the present disclosure. Any modification, equivalent replacement and improvement, etc. made within the spirit and principle of the present disclosure should all be included within the scope of protection of the present disclosure.

## Claims

1. A high-speed hairdryer brushless motor, comprising an outer housing, a stator assembly and a rotor assembly, wherein:
the stator assembly comprises a stator core and a coil assembly, the stator core comprises a hollow yoke portion and a teeth portion mounted on an inner wall of the yoke portion, an outer wall of the yoke portion is fixed on an inner wall of the outer housing, the teeth portion comprises an inner cylinder body and N outer teeth integrally formed and disposed on an outer wall of the inner cylinder body and N≥2, an inner wall of the inner cylinder body is a complete cylindrical surface, the N outer teeth are evenly arranged around a centerline of the cylindrical surface, the outer wall of the inner cylinder body is provided with N magnetic insulating grooves and the N magnetic insulating grooves are evenly arranged in a circumferential direction, each two adjacent outer teeth respectively provided therebetween with one of the magnetic insulating grooves, each of the magnetic insulating grooves is provided along an entire length of the inner cylinder body in an axial direction, the coil assembly is wound around the outer teeth of the teeth portion;
each of the magnetic insulating grooves is a V-shaped groove that opens toward an exterior of the inner cylinder body; and
the rotor assembly comprises a rotating shaft and a rotor magnet mounted on the rotating shaft, the rotating shaft is mounted on the inner wall of the outer housing through bearings, an air gap is provided between the rotor magnet and the cylindrical surface.

2. The high-speed hairdryer brushless motor according to claim 1, wherein that the coil assembly is connected to a PCB assembly through a plurality of pins, the PCB assembly comprises a PCB board and a connector mounted on the PCB board, the PCB board is respectively provided with a pinhole in a position that corresponds to each of the plurality of pins, and each pin is respectively inserted into the pinhole in the corresponding position and then connected to the PCB board.

3. The high-speed hairdryer brushless motor according to claim 1, wherein that the inner wall of the yoke portion is evenly arranged with a plurality of engaging grooves in a circumferential direction, and each outer tooth of the teeth portion is respectively engaged within one of the engaging grooves.

4. The high-speed hairdryer brushless motor according to claim 3, wherein that a width of one end of the outer tooth far away from the inner cylinder body is enlarged relative to a width of one end of the outer tooth proximate to the inner cylinder body, thereby forming a positioning protrusion, and the positioning protrusion engages within the engaging groove.

5. The high-speed hairdryer brushless motor according to claim 1, wherein that any two adjacent outer teeth are symmetrically located on two sides of the magnetic insulating groove between the two adjacent outer teeth.

6. The high-speed hairdryer brushless motor according to claim 1, wherein that the rotor magnet is an annular integral structure.

7. The high-speed hairdryer brushless motor according to claim 1, wherein that it further comprises a silicone sleeve sleeved on the rotating shaft, two bearings are provided on the rotating shaft, and the silicone sleeve is located between the two bearings so as to reduce vibration generated by the rotor assembly when rotating.

8. The high-speed hairdryer brushless motor according to claim 1, wherein that each of the outer teeth is provided with a wire winding groove, and the coil assembly is wound on the wire winding grooves.

9. The high-speed hairdryer brushless motor according to claim 1, wherein that the rotor magnet is mounted on a rotor magnet mounting section of the rotating shaft, the rotor magnet mounting section includes an A section and a B section, the A section is provided with knurls, the A and B sections are provided with a UV anaerobic adhesive, a diameter of the B section is less than a diameter of the A section, thereby forming a step at an end portion of the A section proximate to the B section, so that storage capacity of the UV anaerobic adhesive on the rotor magnet mounting section is increased, the UV anaerobic adhesive is solidified by UV lamp irradiation, so that an inner wall of the rotor magnet is securely bonded to the rotor magnet mounting section, thereby improving pull-out force of the rotor magnet.

10. The high-speed hairdryer brushless motor according to claim 1, wherein that the rotating shaft has an impeller mounting section for contacting with an inner wall of an impeller and fixedly mounting the inner wall of the impeller, the impeller mounting section includes a first section and a second section, the first section is provided with knurls, the first and second sections are provided with a UV anaerobic adhesive, a diameter of the second section is less than a diameter of the first section, thereby forming a step at an end portion of the first section proximate to the second section, so that storage capacity of the UV anaerobic adhesive on the impeller mounting section is increased, the UV anaerobic adhesive is solidified by UV lamp irradiation, so that the inner wall of the impeller is securely mounted on the impeller mounting section, thereby improving pull-out force of the impeller.
